Europäisches Patentamt

European Patent Office

Office européen des brevets

(11) Veröffentlichungsnummer: **0 162 249**
**A1**

## (12) EUROPÄISCHE PATENTANMELDUNG

(21) Anmeldenummer: 85104024.6

(22) Anmeldetag: 03.04.85

(51) Int. Cl.⁴: **B 65 B 35/54**
**B 65 G 47/68**

(30) Priorität: 04.05.84 DE 3416499

(43) Veröffentlichungstag der Anmeldung:
27.11.85 Patentblatt 85/48

(84) Benannte Vertragsstaaten:
BE CH DE FR IT LI LU NL

(71) Anmelder: ROSE VERPACKUNGSMASCHINENFABRIK
THEEGARTEN GMBH & CO KG
Widdersdorfer Str. 185
D-5000 Köln 30(DE)

(72) Erfinder: Rütter, Karl Josef
Pletschmühlenweg 114
D-5024 Pulheim(DE)

(74) Vertreter: Hennicke, Albrecht, Dipl.-Ing. et al,
Patentanwälte Dipl.-Ing. Buschhoff Dipl.-Ing. Hennicke
Dipl.-Ing. Vollbach Kaiser-Wilhelm-Ring 24 Postfach 190
408
D-5000 Köln 1(DE)

(54) Vorrichtung zum Zuführen von Gegenständen zu einer Verpackungsstation.

(57) Vorrichtung zum Zuführen von Gegenständen, insbesondere Schokoladeriegeln zu einer Verpackungsstation, beispielsweise einer Einwickelvorrichtung mit zwei nebeneinander angeordneten Längsförderern (14 und 15), an deren vorderen Enden (14a und 15a) ein diese beide übergreifender Querschieber (19) angeordnet ist, der abwechselnd bei jedem Hub eines der jeweils vorne liegenden Gegenstände (11a bzw. 12a) einem Einstößer (31) zuschiebt, der in der Mitte zwischen den beiden Längsförderern (14 und 15) angeordnet ist und die Gegenstände (11a bzw. 12a) in die Verpackungsstation (10) schiebt. Der Querschieber (19) hat Mitnehmer (25 und 26) und ist um seine Längsachse drehbar, so daß immer einer der Mitnehmer einschwenkt und einen der vorne liegenden Gegenstände (11a bxw. 12a) hintergreift, während der andere Mitnehmer hochschwenkt und über den nächsten Gegenstand hinwegfährt. Die Zuführgeschwindigkeit der Gegenstände (11a und 12a) zur Verpackungsstation (10) kann hierdurch doppelt so groß sein wie die Zuführgeschwindigkeit der Längsförderer (14 und 15).

FIG. 1

EP 0 162 249 A1

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

−1−

**0162249**

Aktenz.:

Reg.-Nr.

| Tg 169 |
bitte angeben

KÖLN, den 30.4.1984
he/kr

Anm.: Rose Verpackungsmaschinenfabrik
Theegarten GmbH & Co. KG,
Widdersdorfer Str. 185, 5000 Köln 30

Titel: Vorrichtung zum Zuführen von Gegenständen zu
einer Verpackungsstation

Die Erfindung betrifft eine Vorrichtung zum Zuführen von
Gegenständen, insbesondere von solchen mit empfindlicher
Oberfläche, wie Schokolade- oder Süßwaren, zu einer Verpackungsstation, wie einer Einwickelvorrichtung od.dgl.,
mit zwei nebeneinander angeordneten Längsförderern und
einer Übergabevorrichtung, welche die ihr von beiden Förderern abwechselnd zugeführten Gegenstände einen nach dem
anderen in die Verpackungsstation leitet.

Gegenstände, die eine empfindliche Oberfläche haben, wie
dies beispielsweise bei Schokoladeriegeln od.dgl. der
Fall ist, können beim Fördern nicht eingespannt werden,
sondern nur frei auf einem Förderer liegend transportiert
werden. Hierdurch besteht bei diskontinuierlicher Förderung der Nachteil, daß beim Beschleunigen der Gegenstände
aus der Ruhelage die Förderfläche, beispielsweise ein
Förderband, insbesondere bei Gegenständen mit geringem
Gewicht eine kleine Strecke unter den Gegenständen entlangrutscht, bevor diese mitgenommen werden. Die Fördergeschwindigkeit ist deshalb auf eine bestimmte Stückzahl
pro Minute begrenzt.

Andererseits vermögen moderne Verpackungsmaschinen, beispielsweise Einwickelmaschinen, die ein Papier oder eine

0162249

Metallfolie um die zu verpackenden Gegenstände schlagen,
eine wesentlich höhere Stückzahl zu verarbeiten. Es hat
deshalb nicht an Versuchen gefehlt, die von einer Verpackungsmaschine verarbeitbare Menge an Gegenständen mit
mehreren Förderern herbeizuschaffen. So ist es beispielsweise bekannt (DE-PS 25 10 394), zum Zuführen von Gegenständen zu einer Verpackungsmaschine zwei parallel nebeneinander angeordnete Längsförderer einzusetzen, die im Abstand von etwas mehr als der doppelten Gegenstandslänge
beschickt werden und wobei die leeren Positionen des einen
Förderers mit den Gegenständen des anderen Förderers gefüllt werden, die mittels eines schräg zur Transportrichtung der Förderkette gestellten, umlaufenden Fördergurtes
auf das unmittelbar danebenlaufende Förderband übergeschoben werden. Die Fördermenge eines Längsförderers pro Zeiteinheit wird hierdurch verdoppelt, es ist aber schwierig,
die mit hoher Geschwindigkeit von dem kontinuierlich laufenden Förderer der Verpackungsstation zugeführten Gegenstände einen nach dem anderen von dem Förderer abzunehmen
und in die Verpackungsmaschine einzuspeisen.

Bei einer anderen Zuführeinrichtung werden ebenfalls zwei
Längsförderer eingesetzt, welche die von ihnen transportierten Gegenstände beide gleichzeitig an einen sich absatzweise drehenden Zuführteller abgeben, von dem aus dann
die Gegenstände in die Verpackungsmaschine eingespeist werden. Diese Konstruktion ist verhältnismäßig kompliziert und
teuer, da für den zusätzlich vorzusehenden Zuführteller ein
besonderer Antriebsmechanismus und eine hierauf abgestimmte
Einspeisvorrichtung für die Verpackungsmaschine vorgesehen
werden muß.

Aufgabe der Erfindung ist es, eine einfache und sicher arbeitende Vorrichtung zum Zuführen von Gegenständen zu einer Verpackungsmaschine zu schaffen, mit der auch Gegenstände mit empfindlicher Oberfläche, die nur langsam transportiert werden können, in einer so großen Zahl pro Zeiteinheit einer Verpackungsmaschine zugeführt werden können,
wie sie eine Hochleistungsverpackungsmaschine verarbeiten
kann.

Diese Aufgabe wird mit der Erfindung dadurch gelöst, daß an
den der Verpackungsstation zugewandten Enden der Längsförderer ein sich quer über beide Förderer erstreckender, hin-
und herbewegbarer Querschieber vorgesehen ist, der schwenkbare Mitnehmer an seinen Enden aufweist, welche abwechselnd
die auf beiden Längsförderern in der gleichen vertikalen
Ebene befindlichen, der Verpackungsstation am nächsten liegenden Gegenstände hintergreifen und einem Einstößer vorlegen, der zwischen den Längsförderern angeordnet ist und die
ihm vorgelegten Gegenstände in die Verpackungsstation stößt.

Durch diese Ausgestaltung einer Zuführeinrichtung gelingt
es, die von zwei Längsförderern gleichzeitig zugeführten Gegenstände unmittelbar und zuverlässig in die Verpackungsmaschine mit hoher Geschwindigkeit einzuspeisen, da der Querschieber bei jedem seiner Hübe einen Gegenstand von den
Längsförderern abnimmt und hierbei doppelt so schnell arbeiten kann, wie die Längsförderer. Als Einstößer kann ein mechanischer Schläger oder ein pneumatisch arbeitender Einstößer verwendet werden, der den ihm vom Querschieber präzise
vorgelegten Gegenstand genau und mit hoher Geschwindigkeit
in die Verpackungsmaschine transportieren kann. Ein Zwischenspeicher in Form eines Zellenrades od.dgl. ist nicht
notwendig. Außerdem kann der Querschieber leicht mechanisch
oder hydraulisch gesteuert werden.

Die Mitnehmer sind in verschiedenen Winkellagen zweckmäßig
fest mit dem Querschieber verbunden, der um seine Längsachse drehbar und so gesteuert ist, daß er vor jedem Hub
eine Winkeldrehung ausführt, durch welche der eine Mitnehmer in die Querschubbahn der Gegenstände eingeschwenkt und der andere Mitnehmer ausgeschwenkt wird. Der Querschieber hintergreift dann bei seinem Hingange mit seinem in Querschubrichtung hinteren Mitnehmer einen Gegenstand auf dem einen Längsförderer, während der am anderen Ende des Querschiebers angeordnete, hochgeschwenkte Mitnehmer über den gerade vorgeschobenen Gegenstand auf dem anderen Längsförderer hinweggleitet. Bevor sich dann der Hergang des Querschiebers vollzieht, wird der andere Mitnehmer in die Querschubbahn eingeschwenkt und hintergreift nun den Gegenstand auf dem anderen Längsförderer und schiebt ihn vor den Einstößer, während der Mitnehmer am gegenüberliegenden Ende in hochgeschwenkter Lage wieder über den nächstfolgenden Gegenstand des ersten Längsförderers hinweggeführt wird. Der Querschieber führt also vor jeder Längsbewegung eine Winkeldrehung um seine Längsachse aus, wodurch der jeweils benötigte Mitnehmer in die Querschubbahn eingeschwenkt und der nicht benötigte Mitnehmer aus der Querschubbahn ausgeschwenkt wird.

Damit die Gegenstände beim Querverschieben vor dem Einstößer nicht springen oder verkanten, hat der Querschieber in seinem mittleren Bereich zwei Anschläge, von denen der eine Anschlag die gleiche Winkellage hat wie der Mitnehmer am einen Ende des Querschiebers und von denen der andere Anschlag die gleiche Winkellage hat wie der Mitnehmer am anderen Ende des Querschiebers. Ferner haben beide Anschläge von den ihnen zugeordneten Mitnehmern einen Abstand, der der Breite der Gegenstände quer zur Förderrichtung der Längsförderer entspricht. Jeder Gegenstand wird also bei seinem Quervorschub auf beiden Seiten gehalten und hierdurch sicher geführt.

Eine besonders einfache Konstruktion ergibt sich, wenn beide Anschläge gemeinsam auf einer Scheibe angeordnet sind, die mit dem Querschieber fest verbunden ist und deren eine Stirnfläche den einen Anschlag und deren andere Stirnfläche den anderen Anschlag bildet.

Es ist zweckmäßig, wenn sich der Querschieber oberhalb der
beiden Förderer befindet, so daß der Einstößer in Längsrichtung der Förderer arbeiten und die Gegenstände etwa
horizontal in die Verpackungsstation einschieben kann.
Es ist aber auch möglich, den Querschieber vor den Stirnenden der Längsförderer anzuordnen und den Einstößer dann
nach oben oder schräg nach unten arbeiten zu lassen, wenn
die Verpackungsstation oberhalb oder unterhalb der Längsförderer angeordnet ist. Bei bestimmten Verpackungsmaschinen kann es auch zweckmäßig sein, wenn der Einstößer die
Gegenstände in einen Übergaberevolver einführt, der mit
einer Vielzahl von auf seinem Umfang angeordneten Greifeinrichtungen versehen ist, mit denen die übernommenen
Gegenstände vor dem Einführen in die Verpackungsmaschine
gedreht und in die für das Verpacken günstigste Lage gebracht werden können.

Weitere Merkmale und Vorteile der Erfindung ergeben sich
aus der nachfolgenden Beschreibung und den Zeichnungen,
in denen eine bevorzugte Ausführungsform der Erfindung
an einem Beispiel näher erläutert ist. Es zeigt:

Fig. 1   eine Zuführvorrichtung nach der Erfindung
und die Verpackungsstation in einer schematischen Draufsicht,

Fig. 2a bis 2d   eine Ansicht des Querschiebers in
Richtung des Pfeiles 2 in vier verschiedenen Arbeitsstellungen und

Fig. 3a bis 3d   die Stellungen der am Querschieber angeordneten Mitnehmer in ihren verschiedenen Winkelstellungen in den verschiedenen Arbeitsstellungen des Querschiebers in Richtung der Pfeile 3 gesehen.

In den Zeichnungen ist mit 10 eine Verpackungsstation zum
Einwickeln von untereinander gleichen Gegenständen 11 und
12 bezeichnet, die der Verpackungsstation 10 mit einer Zuführeinrichtung zugeführt werden, die in ihrer Gesamtheit
mit 13 bezeichnet ist. Bei den Gegenständen handelt es
sich im vorliegenden Falle um Schokoladeriegel mit empfindlicher Oberfläche, die dicht aneinander liegend von
zwei Längsförderern 14 und 15 in Richtung des Pfeiles 2
der Verpackungsstation 10 zugeführt werden. Jeder Längsförderer 14, 15 hat ein hier nicht näher dargestelltes,
kontinuierlich umlaufendes Förderband, auf dem die Gegenstände 11, 12 liegen, die an dem der Verpackungsstation 10
zugewandten Ende 14a bzw. 15a eines jeden Förderers gegen
einen festen Anschlag 16 bzw. 17 geschoben werden.

Die beiden Längsförderer 14 und 15 sind im seitlichen Abstand voneinander angeordnet, wobei der Zwischenraum 18
zwischen diesen beiden Förderern etwas breiter ist als
die Breite **b** der Gegenstände 11, 12 quer zur Längsrichtung der Förderer 14 und 15.

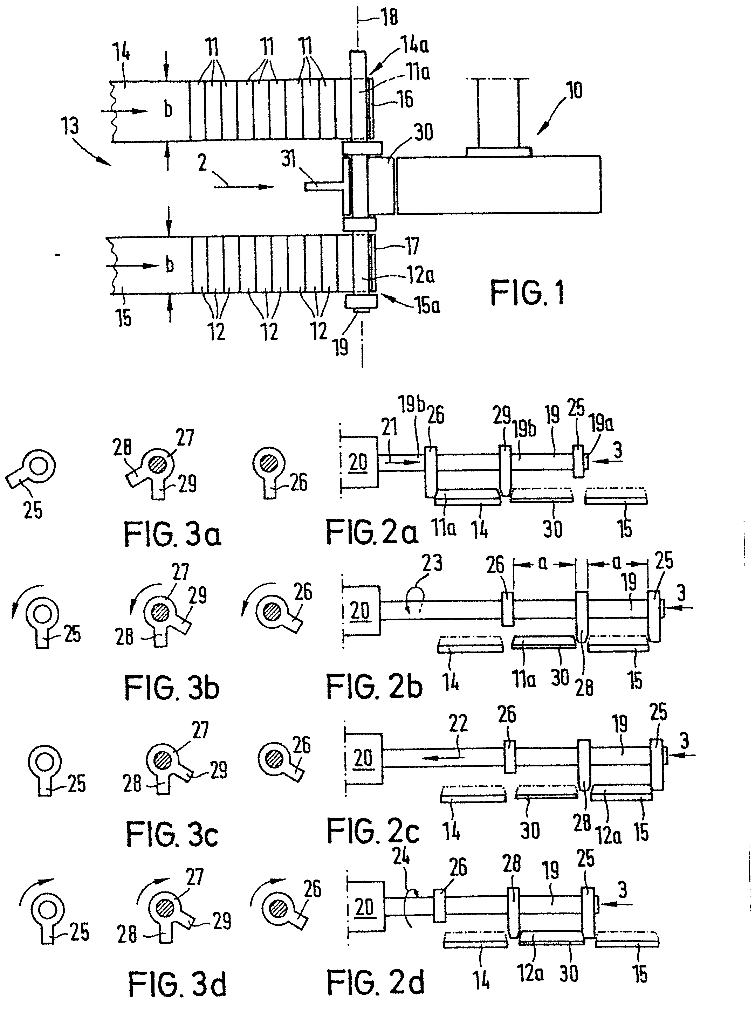

Oberhalb der jeweils an den Anschlägen 16 und 17 anliegenden Gegenstände 11a und 12a, die auf den beiden Längsförderern 14 und 15 in der gleichen vertikalen Ebene 18 sich befinden und der Verpackungsstation 10 am nächsten liegen,
ist ein Querschieber 19 angeordnet, der sich quer über beide Förderer 14 und 15 erstreckt und von einem in den Fig.
2a bis 2d nur angedeuteten Antrieb 20 in seiner Längsrichtung und damit quer zur Förderrichtung 2 der Längsförderer
14 und 15 in Richtung der Pfeile 21 und 22 hin- und herverschiebbar und um seine Längsachse in verschiedene Winkellagen drehbar ist, was durch die Pfeile 23 und 24 in den
Fig. 2b und 2d angedeutet ist. Der Querschieber 19 trägt an
seinen beiden Enden 19a und 19b je einen Mitnehmer 25 und 26, die um einen Winkel von 60° gegeneinander versetzt sind
und bis in die Höhe der auf den Längsförderern 14 und 15
liegenden vordersten Gegenstände 11a und 12a nach unten ragen. In seinem mittleren Bereich 19b trägt der Querschieber 19 eine Scheibe 27 mit zwei Anschlägen 28 und 29. Die
Scheibe 27 ist ebenso wie die Mitnehmer 25 und 26 mit dem
Querschieber 19 drehfest verbunden und so auf diesem angeordnet, daß der Anschlag 28 auf dem Querschieber die gleiche Winkellage einnimmt wie der Mitnehmer 25 am einen Ende
19a und der Anschlag 29 die gleiche Winkellage hat wie der
Mitnehmer 26 am anderen Ende 19b des Querschiebers 19. Beide Anschläge 28 und 29 haben von den ihnen zugeordneten
Mitnehmern 25 bzw. 26 einen lichten Abstand a welcher der
Breite b der Gegenstände 11 und 12 quer zur Förderrichtung
der Längsförderer 14 und 15 entspricht.

Unterhalb des Querschiebers 19 befindet sich zwischen den
Längsförderern 14 und 15 und auf gleicher Höhe mit diesen
ein Vorlegetisch 30, vor dem ein  in Richtung des Pfeiles
2 vor- und zurückbewegbarer Einstößer 31 angeordnet ist,
der die ihm auf dem Vorlegetisch 30 vorgelegten Gegenstände
11 oder 12 in Richtung des Pfeiles 2 in die Verpackungsstation 10 stößt. Der Einstößer kann mechanisch oder pneumatisch wirken oder betätigt werden und die Verpackungsstation 10 kann verschiedene Ausbildungen haben, beispielsweise mit mehreren Greifern ausgerüstet sein, die auf dem
Umfang eines absatzweise weiterschaltenden Revolvers angeordnet sind und die Gegenstände beim  Einwickeln in verschiedenen Stellungen halten und mit  anderen Verpackungswerkzeugen zusammenwirken, die in den durchlaufenen Stationen angeordnet sind.

Die Wirkungsweise der Vorrichtung ist folgende:

Von den auf den Längsförderern 14 und 15 kontinuierlich
vorgeschobenen Gegenständen 11 und 12 wird zunächst der der Verpackungsstation zunächst liegende Gegenstand 11a auf
dem Förderer 14 von dem Mitnehmer 26 erfaßt und quer zur
Längsrichtung der Förderer in den Zwischenraum 18 zwischen
beiden Förderern auf die Vorlegeplatte in Richtung des
Pfeiles 21 vorgeschoben. Der Querschieber 19 befindet sich
hierbei in der in Fig. 2a dargestellten Lage, in der die
Mitnehmer 25 und 26 und die Anschläge 28 und 29 die in
Fig. 3 dargestellten Lagen einnehmen, in der der Mitnehmer
26 nach unten gerichtet ist und den Gegenstand 11a auf der
Außenseite des Förderers 14 hintergreift und der Anschlag
29 nach unten weist, an den sich der innere Rand des Gegenstandes 11a anlegen kann und hierdurch beim Vorschub
geführt wird. Während dieses Quervorschubes in Richtung
des Pfeiles 21 befinden sich der Mitnehmer 25 am vorderen
Ende 19a des Querschiebers 19 und der hierzu gehörige
Anschlag 28 in einer hochgeschwenkten Lage, in der der Mitnehmer 25 über den auf dem Förderer 15 vornliegenden Gegenstand 12a hinweggleiten kann.

Sobald der Gegenstand 11a auf der Platte 30 vorgelegt ist,
stößt ihn der Einstößer 31 in Richtung des Pfeiles 2 mit
hoher Geschwindigkeit in die Verpackungsstation 10. Gleichzeitig dreht sich der Querschieber 19 in Fig. 3b entgegen
dem Uhrzeigersinne um 60°, wodurch der am rechten Ende 19a
angeordnete Mitnehmer 25 und der ihm zugeordnete Anschlag
28 nach unten in ihre vertikale Lage und der hintere Mitnehmer 26 am Ende 19b des Querschiebers 19 und der ihm zugeordnete Anschlag 29 im Uhrzeigersinne hochschwenken und
die in Fig. 3b dargestellte Lage einnehmen.

Der Querschieber 19 wird dann in Richtung des Pfeiles 22
zurückbewegt, wobei der Mitnehmer 25 den auf dem Förderer
15 vornliegenden Gegenstand 12a an seiner Außenseite hintergreift und diesen zusammen mit dem Anschlag 28 auf den
Vorlagetisch 30 schiebt (Fig. 2d).

Der Querschieber 19 wird dann in Fig. 3d im Uhrzeigersinne um 60° gedreht, bis die Mitnehmer 25 und 26 und die Anschläge 28 und 29 wieder ihre in Fig. 3a dargestellte Lage einnehmen, in der der Vorlagezyklus von neuem beginnen kann.

Man erkennt, daß der Einstößer 31 mit einer sehr hohen Geschwindigkeit arbeiten kann, da der Querschieber bei jedem Hub abwechselnd einen Gegenstand von einem der beiden Längsförderer 14 und 15 abnimmt, so daß die Gegenstände 11 und 12 der Verpackungsstation 10 mit einer Geschwindigkeit zugeleitet werden können, die doppelt so groß ist wie die Zuführgeschwindigkeit der Längsförderer 14 und 15.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise kann die Verpackungsstation 10 auch anders ausgebildet sein und es ist möglich, anders geartete Einstößer zu verwenden. Anstelle einer Scheibe 27 mit zwei Anschlägen können auch separate Anschläge auf dem Querschieber angeordnet sein.

- 10 -                           0162249

**A n s p r ü c h e :**

1. Vorrichtung zum Zuführen von Gegenständen, insbesondere von solchen mit empfindlicher Oberfläche, wie Schokolade- oder Süßwaren, zu einer Verpackungsstation, wie einer Einwickelvorrichtung od.dgl., mit zwei nebeneinander angeordneten Längsförderern und einer Übergabevorrichtung, welche die ihr von beiden Förderern abwechselnd zugeführten Gegenstände einen nach dem anderen in die Verpackungsstation leitet, dadurch gekennzeichnet, daß an den der Verpackungsstation (10) zugewandten Enden (14a und 15a) der Längsförderer (14 und 15) ein sich quer über beide Förderer (14, 15) erstreckender, hin- und herbewegbarer Querschieber (19) vorgesehen ist, der schwenkbare Mitnehmer (25, 26) an seinen Enden (19a, 19b) aufweist, welche abwechselnd die auf beiden Längsförderern (14, 15) in der gleichen vertikalen Ebene (18) befindlichen, der Verpackungsstation (10) am nächsten liegenden Gegenstände (11a, 12a) hintergreifen und einem Einstößer (31) vorlegen, der zwischen den Längsförderern (14, 15) angeordnet ist und die ihm vorgelegten Gegenstände (11a, 12a) in die Verpackungsstation (10) stößt.

2. Vorrichtung nach Anspruch 1, dadurch gekennzeichnet, daß die Mitnehmer (25, 26) in verschiedenen Winkellagen fest mit dem Querschieber (19) verbunden sind, der um seine Längsachse drehbar und so gesteuert ist, daß er bei jedem Hub eine Winkeldrehung ausführt, durch welche der eine Mitnehmer (25 bzw. 26) in die Querschubbahn der Gegenstände (11a, 12a) eingeschwenkt und der andere Mitnehmer (26 bzw. 25) ausgeschwenkt wird.

3. Vorrichtung nach Anspruch 1 oder 2, dadurch gekennzeichnet, daß der Querschieber (19) in seinem mittleren Bereich (19b) zwei Anschläge (28, 29) aufweist, von denen der eine Anschlag (28) die gleiche Winkellage hat wie der Mitnehmer (25) am einen Ende (19a) des Querschiebers (19) und von denen der andere Anschlag (29) die gleiche Winkellage hat wie der Mitnehmer (26) am anderen Ende (19b) des Querschiebers (19) und daß beide Anschläge (28, 29) von den ihnen zugeordneten Mitnehmern (25 bzw. 26) einen Abstand (a) haben, der der Breite (b) der Gegenstände (11a, 12a) quer zur Förderrichtung (2) der Längsförderer (14, 15) entspricht.

4. Vorrichtung nach einem der Ansprüche 1 bis 3, dadurch gekennzeichnet, daß beide Anschläge (28, 29) gemeinsam auf einer Scheibe (27) angeordnet sind, die mit dem Querschieber (19) fest verbunden ist.

0162249

−1/1−

FIG.1

FIG. 3a

FIG. 3b

FIG. 3c

FIG. 3d

FIG. 2a

FIG. 2b

FIG. 2c

FIG. 2d

Tg 169

))) Europäisches
Patentamt

**EUROPÄISCHER RECHERCHENBERICHT**

0162249
Nummer der Anmeldung

EP 85 10 4024

## EINSCHLÄGIGE DOKUMENTE

| ategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-2 236 181 (ACMA) <br> * Seite 3, Zeile 22 - Seite 5, Zeile 28; Abbildung 2 * | 1 | B 65 B 35/54 <br> B 65 G 47/68 |
| Y | | 2 | |
| | --- | | |
| Y | DE-A-1 940 287 (DE VREE) <br> * Insgesamt * | 2 | |
| | --- | | |
| A | US-A-3 613 331 (GARRETT) <br> * Spalte 4, Zeilen 14-36; Abbildungen 3,4 * | 1 | |
| | ----- | | |
| | | | RECHERCHIERTE SACHGEBIETE (Int. Cl.4) |
| | | | B 65 B <br> B 65 G |

Der vorliegende Recherchenbericht wurde für alle Patentansprüche erstellt.

| Recherchenort <br> DEN HAAG | Abschlußdatum der Recherche <br> 02-08-1985 | Prüfer <br> CLAEYS H.C.M. |
|---|---|---|